# EUROPÄISCHE PATENTSCHRIFT

(11) **EP 0 794 742 B1**
(45) Veröffentlichungstag und Bekanntmachung des Hinweises auf die Patenterteilung: **03.03.1999**
(21) Anmeldenummer: 95936407.6
(22) Anmeldetag: 16.11.1995
(51) Int. Cl.: A61C 8/00

(54) **BINDEGLIED ZWISCHEN EINEM IN EINEM KIEFER SITZENDEN KIEFERIMPLANTAT UND EINEM ZAHNERSATZ SOWIE VERFAHREN ZUM HERSTELLEN DESSELBEN**
CONNECTING MEMBER BETWEEN A MANDIBULAR IMPLANT FIXED IN THE JAW AND A DENTAL PROSTHESIS AND PROCESS FOR PRODUCING THE SAME
ELEMENT DE LIAISON ENTRE UN IMPLANT FIXE SUR LE MAXILLAIRE ET UNE PROTHESE DENTAIRE ET SON PROCEDE DE PRODUCTION

(30) Priorität: 04.12.1994 CH 3637/94
(43) Veröffentlichungstag der Anmeldung: 17.09.1997
(73) Patentinhaber: Huber, Peter, 9542 Münchwilen (CH)
(72) Erfinder: Huber, Peter, 9542 Münchwilen (CH)
(74) Vertreter: Stocker, Kurt
(86) Internationale Anmeldenummer: CH9500269
(87) Internationale Veröffentlichungsnummer: WO9617559

(56) Entgegenhaltungen:
- WO-A-93/09728

## Beschreibung

Die Erfindung betrifft ein Bindeglied nach dem Oberbegriff des Anspruches 1.

Ein Problem beim Anschließen eines Zahnersatzes, wie einer Brücke, an ein Kieferimplantat besteht darin, daß der Kiefer unter Umständen unter einem Winkel zur Horizontalen gewachsen ist, der mit dem Winkel der Zähne nicht übereinstimmt. Es bedarf daher eines Bindegliedes, durch welches dieser Winkelunterschied ausgeglichen wird. Dabei hat es sich in der Vergangenheit herausgestellt, daß infolge der sehr unterschiedlichen Winkel bei verschiedenen Patienten die Anpassung erschwert wird. Zwar hat man schon versucht, den Kopfabschnitt als Justierkugel auszubilden, an der eine mit einer Hohlkugelform versehene Zahnhülse festgeklemmt wird. Allerdings ist zu bedenken, daß die in einem Kiefer auftretenden Kräfte sehr groß sind, weshalb sich die festgeklemmte Zahnhülse leicht wieder gelockert wird. Beispiele für solche justiermöglichkeiten sind der US-A-5,092,770 sowie den im Prioritätsintervall veröffentlichten US-A-5,417,570 und 5,443,467 zu entnehmen. Die WO 93/09728 beschreibt, wie im Oberbegriff von Anspruch 1 augegeben, ein Bindeglied mit zwei Gewindebolzen, wobei am zweiten eine Hülse aufgeschraubt wird, die die Kugel eines ausrichtbaren Bolzens festklemmt.

Der Erfindung liegt daher die Aufgabe zugrunde, ein Bindeglied der eingangs genannten Art robust und einfach auszubilden und dabei dennoch der individuellen Winkellage von Kieferimplantat und Zahnwinkel Rechnung zu tragen. Dies gelingt mit Hilfe eines Bindegliedes mit den kennzeichnenden Merkmalen des Anspruches 1.

Dadurch, daß die beiden Gewindebolzen einstückig Teil eines Ganzen sind, wird eine nachträgliche Justierung und ein Festklemmen überflüssig, so daß eine robuste und feste Ausführung gewährleistet ist. Dabei wird der individuellen Winkellage von Kieferimplantat und Zahnwinkel durch eine Ausbildung der beiden Gewindebolzen unter dem jeweiligen Winkel Rechnung getragen.

Theoretisch wäre dies durch Messung des Winkels und Nachbilden der beiden Bolzen, etwa durch einen Gieß- oder einen sonstigen Formprozeß möglich. Vorteilhaft ist aber die Herstellung des erfindungsgemäßen Bindegliedes durch die im Anspruch 3 sowie in dessen Unteransprüchen angegebenen Verfahrensschritte, insbesondere in der Ausführung nach Anspruch 5.

Um Probleme beim Ansatz eines spanabhebenden Werkzeuges unter einem Winkel zum ersten Gewindebolzen zu vermeiden, sind vorzugsweise die Merkmale des Anspruches 6 vorgesehen. Dabei kann die gekrümmte Oberfläche an sich eine beliebige Form, z.B. Eiform, besitzen, wenn sie nur die Handhabung des spanabhebenden Werkzeuges erleichtert. Bevorzugt aber bildet die gekrümmte Form eine Kugel. Dies führt dann zu einer Ausbildung des Bindegliedes nach Anspruch 2. Hier hat also die Kugel nicht Justierfunktion, wie es beim Stande der Technik der Fall war, sondern dient, wie gesagt, dem erleichterten Ansetzen bzw. Handhaben des Werkzeuges.

Weitere Einzelheiten der Erfindung ergeben sich an Hand der nachfolgenden Beschreibung eines in der Zeichnung schematisch dargestellten Ausführungsbeispieles. Es zeigen:
- Fig. 1: einen erfindungsgemäß ausgebildeten Rohling zur Herstellung eines erfindungsgemäßen Bindegliedes;
- Fig. 1A: eine Stirnansicht auf den die Stellung bzw. die Richtung des Gewindebolzens des Rohlings festhaltenden bzw. markierenden Stift;
- Fig. 2: das Aufsetzen eines Hohlfräswerkzeuges am Kopfteil des Rohlings nach Durchführung eines Kieferabdruckes zur Bestimmung der Stellung der Achse des Implantates und des darin einzuschraubenden Bolzens des Rohlings sowie nach Entfernen des die Richtung der Achse von dessen Bolzen festhaltenden Markierstiftes;
- Fig. 2A: eine Druntersicht unter die Bearbeitungsfläche des Hohlfräswerkzeuges;
- Fig. 3: das so mit dem weiteren Bolzen versehene Bindeglied in in das Implantat eingeschraubter Stellung mit aufgeschraubter Mutterhülse für den Zahnersatz.

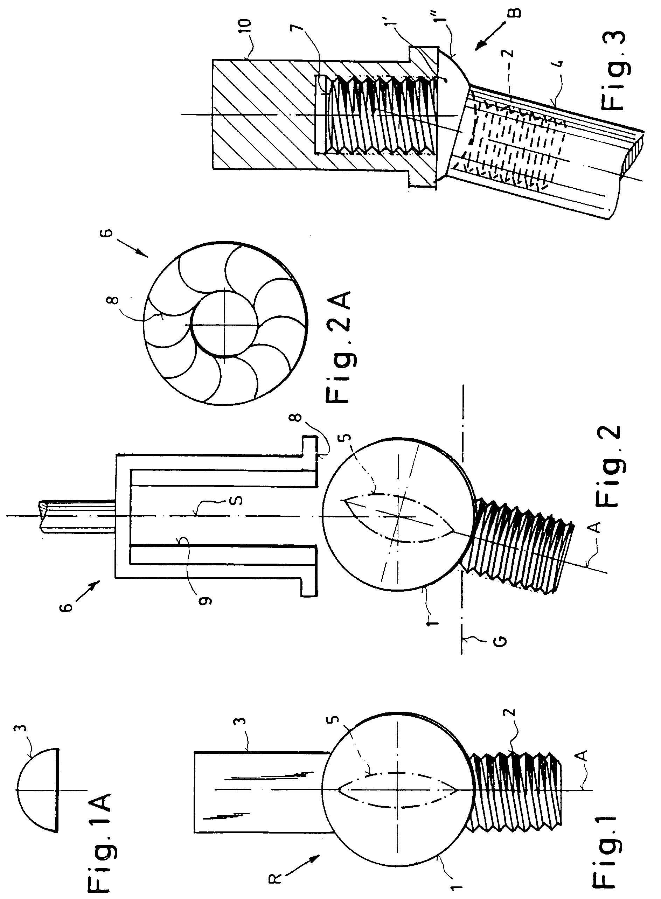

Zur Erstellung eines Bindegliedes zwischen einem in einem Kiefer sitzenden Kieferimplantat 4 (vgl. Fig. 3) und einem Zahnersatz, wie einer Brücke, geht man von einem Rohling R gemäß den Fig. 1 und 1A aus. Dieser Rohling R besteht aus einem ersten Gewindebolzen 2 zum Befestigen am Kieferimplantat 4 und einem Kopfabschnitt 1. Dieser Kopfabschnitt 1 ist aus später ersichtlichen Gründen zweckmäßig gerundet und insbesondere in der aus Fig. 1 erkennbaren Weise kugelförmig gestaltet.

Nachdem ein Implantat in den Kiefer des Patienten eingesetzt worden ist, wird der Rohling R gemäß Fig. 1 mittels des Gewindebolzens 2 aufgeschraubt und festgezogen. Sodann wird in bekannter Weise ein Kieferabdruck mittels einer gummiartigen Masse hergestellt.

Gerade wenn der Kopfteil 1 in der bevorzugten Ausführungsform kugelförmig ausgebildet ist, ist an Hand des Abdruckes aber anschließend die Lage bzw. die Ausrichtung des Gewindebolzens 2 und seiner Achse A nicht zu erkennen, weil ja nur der Kopfteil 1 aus dem Implantat herausragt. Ist der Kopfteil hingegen etwas länglich-rund und besitzt eine Längsachse in Fortsetzung der Achse A, so gäbe dies einen Hinweis auf die Richtung und die Winkellage der Achse A. Anderseits wird aber damit die spätere Bearbeitung des Kopfteiles erschwert.

Deshalb ist es bevorzugt, wenn eine Markiereinrichtung für die Stellung der Achse A im Kiefer bzw. im Implantat vorgesehen ist. Diese Markierungseinrichtung kann als (strichpunktiert angedeutete) Kerbe 5 in der Kugelfläche des Kopfes 1 ausgebildet sein, doch ist dies nicht bevorzugt. Günstiger ist es, die Richtung der Achse A durch einen in Flucht zur Achse A verlaufenden Vorsprung 3 festzuhalten und anzugeben. Ein solcher stiftartiger bzw. halbzylindrischer Vorsprung 3 hinterläßt im Gummiabdruck eine eindeutige Spur bzw. Vertiefung und gibt daher im danach hergestellten Abguß einen sicheren Hinweis auf die Stellung des Rohlings und die Richtung der Achse A. Der stiftartige Vorsprung muss so ausgebildet sein, dass er nur in einer Orientierung in die von ihm erzeugte Vertiefung im Abdruck einsetzbar ist.

Nach dem Abziehen des Abdruckes werden daher die jeweiligen Rohlinge R wieder abgeschraubt und gehen, von 1 bis x numeriert ins zahntechnische Labor. Dort können sie mit dem Gewindebolzen 2 in Manipulierimplantate eingeschraubt festgezogen werden. Mit ihrem halbzylindrischen Vorsprung werden sie in die entsprechenden Vertiefungen des Gummiabdrucks gesteckt, so dass alle Gewinde der Gewindebolzen 2 relativ zum Abdruck in der gleichen Stellung sind, wie im voll eingeschraubten Zustand im Kiefer des Patienten beim Nehmen des Gummiabdruckes. Sodann wird alles bis knapp unter den Rohling bzw. dessen Kopf 1 mit einer erhärtenden Masse, wie Gips, ausgegossen, um die an Hand des Stiftes 3 festgestellte und der Lage des Implantates im Kiefer des jeweiligen Patienten entsprechende Stellung des Rohlings und die Ausrichtung der Achse A des Gewindebolzens 2 zu fixieren.

Diese Situation ist in Fig. 2 dargestellt, in der die strichpunktierte Linie G das Niveau des Gipsbettes andeutet. Das Manipulierimplantat des Labors ist in Fig. 2 der Einfachheit halber weggelassen. Es wurde nach dem Abnehmen des Abdruckes auch der nun nicht mehr erforderliche Markierstift 3 abgesägt, so daß sich an der Oberfläche die glatte Kugel 1 präsentiert. Es ist ersichtlich, daß diese Glattheit beeinträchtigt wäre, würde man die Kerbe 5 zur Markierung der Lage der Achse A verwenden.

Wenn in dieser Situation ein spanabhebendes Bearbeitungswerkzeug, wie der in den Fig. 2, 2A gezeigte Hohlfräser 6 entlang einer genau lotrechten Achse S auf die Kugel 1 abgesenkt, so fräst er aus der Kugel 1 einen weiteren Bolzen 7, der dann mit einem Gewinde versehen werden kann, wie aus Fig. 3 ersichtlich ist. Der Bolzen 7 wird dann genau in der Achse S verlaufen, und diese wird sich mit der Achse A im Kugelmittelpunkte schneiden, wobei die beiden Achsen A, S miteinander einen Winkel einnehmen, der einerseits durch die Lage des Implantates 4 im Kiefer des Patienten und anderseits durch die erwünschte orthogonale Stellung des jeweiligen Zahnersatzes bestimmt ist.

Hierzu besitzt der Hohlfräser 6 sowohl stirnseitige Bearbeitungskanten 8 als auch innere, einen Hohlzylinder bildende Bearbeitungskanten 9. Das Ergebnis dieser spanabhebenden Bearbeitung ist aus Fig. 3 ersichtlich, wo das fertige Bindeglied B bereits in das Implantat 4 des Patienten eingesetzt dargestellt ist. Nach dem Festziehen des Gewindebolzens 2 im Implantat des Kiefers liegen die beiden Gewindebolzen 2 und 7 in einer festen und daher unverrückbaren, aber auch richtigen winkelmäßigen Zuordnung, die durch die zuvor geschilderten Verfahrensschritte gesichert ist. Aus der vorherigen Bearbeitung besitzt dieses Bindeglied B dann auch noch einen kugelsegmentartigen Abschnitt 1' mit gegen den ersten Gewindebolzen gerichteter Kugelfläche 1'', während der weitere Gewindebolzen 7 eine Länge besitzt, die mehr als bis zur Mitte der die Kugelfläche 1'' bildenden ganzen Kugel 1 (vgl. Fig. 1, 2), z.B. 2/3 derselben, entspricht. Es kann zweckmässig sein, die Gewinde der beiden Bolzen 2, 7 gegenläufig zu gestalten, z.B. ein Linksgewinde für den Bolzen 7 vorzusehen.

Auf diesen Gewindebolzen 7 kann dann eine Mutter- bzw. Zahnhülse 10 aufgeschraubt werden, die mit dem jeweiligen Zahnersatz, wie der erwähnten Brücke, verbunden ist und vorzugsweise zur besseren Handhabung am Ende mit der Öffnung einen kantigen, z.B. einen viereckigen oder vorzugsweise sechskantigen, Querschnitt besitzt. Auf diese Mutterhülse wird dann beispielsweise die Brücke aufgeklebt. Indem alle Achsen S der zu Bindegliedern bearbeiteten Rohlinge eines Abdruckes, im Kiefer eingesetzt, parallel ausgerichtet sind, kann ein Zahnersatz mit den entsprechenden Bohrungen problemlos aufgesetzt werden.

Darüberhinaus ermöglicht ein, dem Kiefer zugewandter Endbereich der Mutterhülse 10 mit kantigem Querschnitt aber auch eine leichtere Demontage, falls dies erforderlich ist. Sie wird dann mit einem Schlüssel angefaßt und gegenüber dem Gewinde des Bolzens 7 verdreht. Das erzielbare hohe Drehmoment ermöglicht ein Lösen der Verbindung bzw. Verleimung zwischen der Zahn- bzw. Mutterhülse und dem Zahnersatz. Nach dem Lösen aller Hülsen braucht die Brücke nur mehr abgehoben zu werden. Umgekehrt ermöglicht das erfindungsgemäße Verfahren eine Verbindung unter den verschiedensten Neigungswinkeln zur Vertikalen auf einfachste und robusteste Art, wobei die Montage und Demontage problemlos ist.

Durch ein sorgfältiges Durchführen des beschriebenen Verfahrens wird gewährleistet, dass die Gewinde der Manipulierimplantate im Gipsabguss identisch angeordnet sind, wie die Gewinde der im Kiefer befestigten Implantate. Deshalb ist der am, im Gipsabguss befestigten, Rohling ausgebildete weitere Bolzen bzw. Gewindebolzen 7 nach dem vollständigen Einschrauben des Bindegliedes B in ein Implantat im Kiefer in der gewünschten Richtung ausgerichtet. Wenn etwa zu einem späteren Zeitpunkt ein beschädigtes Bindeglied ersetzt werden muss, kann dieses direkt am Gipsabguss aus einem neuen Rohling hergestellt werden. Nach dem Lösen der Zahnhülsen und dem Abnehmen des Zahnersatzes wird das defekte Bindeglied aus dem Implantat herausgeschraubt und durch das neue ersetzt. Darauf können die Zahnhülse und der Zahnersatz direkt wieder aufgesetzt werden.

## Patentansprüche

1. Bindeglied (B) zwischen einem in einem Kiefer sitzenden Kieferimplantat (4) und einem Zahnersatz, mit einem ersten Gewindebolzen (2) zum Befestigen am Kieferimplantat (4), der mittels eines weiteren Gewindebolzens (7) mit einer Hülse (10) verbindbar ist, wobei das Bindeglied (B) einteilig beide Gewindebolzen (2, 7) trägt, dadurch gekennzeichnet, daß die winkelmäßige Zuordnung der beiden Gewindebolzen (2, 7) einerseits dem Kiefer implantat und anderseits der Ausrichtung des Zahnes bzw. Zahnersatzes angepaßt ist.

2. Bindeglied nach Anspruch 1, dadurch gekennzeichnet, daß zwischen den beiden Gewindebolzen (2, 7) ein kugelsegmentartiger Abschnitt (1') mit gegen den ersten Gewindebolzen (2) gerichteter Kugelfläche (1'') vorgesehen ist und vorzugsweise der weitere Gewindebolzen (7) eine Länge aufweist, die mehr als bis zur Mitte der die Kugelfläche bildenden ganzen Kugel (1), z.B. 2/3 derselben, entspricht.

3. Verfahren zum Herstellen eines Bindegliedes (B) nach einem der vorhergehenden Ansprüche aus einem ersten Rohling (R) mit einem Gewindebolzen (2) und einem daran angeschlossenen Kopfabschnitt (1), dadurch gekennzeichnet, daß dieser Rohling (R) zunächst in eine der Ausrichtung des Kiefers bzw. des darin befestigten Implantates (4) entsprechende Winkellage relativ zur Achse (S) eines spanabhebenden Werkzeuges (6) gebracht wird, und daß anschließend mittels des Werkzeuges (6) der weitere Gewindebolzen (7) aus dem Kopfteil (1) geschnitten und das Gewinde eingebracht wird, wobei die winkelmäßige Zuordnung der beiden Gewindebolzen (2, 7) einerseits dem Kiefer und anderseits der Ausrichtung des Zahnes bzw. Zahnersatzes angepaßt ist.

4. Verfahren nach Anspruch 3, dadurch gekennzeichnet, daß als Werkzeug ein Hohlbohrer oder -fräser (6) verwendet wird, dessen hohles Innere beim spanabhebenden Bearbeiten des Kopfabschnittes (1) den zu fertigenden Bolzen (7) übrigläßt.

5. Verfahren nach Anspruch 3 oder 4, dadurch gekennzeichnet, daß der Kopfabschnitt (1) eine gekrümmte Oberfläche aufweist, insbesondere kugelförmig ist.

6. Verfahren nach Anspruch 3, 4 oder 5, dadurch gekennzeichnet, daß der Rohling (R) mit Bolzen (2) und daran angeschlossenem Kopfabschnitt (1) zunächst in einer der Ausrichtung des Kiefers bzw. des darin befestigten Implantates (4) entsprechende Winkellage relativ zur Achse (S) eines spanabhebenden Werkzeuges (6) in eine erhärtende Masse, wie Gips (G), als Haltebasis gebracht wird, und daß nach dem Erhärten die spanabhebende Bearbeitung erfolgt.

7. Verfahren nach einem der Ansprüche 3 bis 6, dadurch gekennzeichnet, daß zur Bestimmung der Ausrichtung des Kiefers bzw. des darin befestigten Implantates (4) der Rohling (R) erst in das Implantat (4) eingebracht und seine Stellung im festsitzenden Zustand, insbesondere die Richtung der Achse (A) seines Gewindebolzens (2), mittels einer Markiereinrichtung (3, 5) festgehalten wird, daß anschließend ein Kieferabdruck samt dem Rohling (R) und der Markiereinrichtung (3, 5) angefertigt und nach dem Entfernen des Abdruckes und des Rohlings (R) vom Kiefer der Rohling (R) mit einem daran festgesetzten Manipulierimplantat versehen und mittels der Markiereinrichtung (3,5) am Abdruck befestigt wird, worauf, vorzugsweise nach Ausgießen mit der erhärtenden Masse, wie Gips (G), und insbesondere nach Entfernen des Abdruckes und der Markierungseinrichtung (3), die spanabhebende Bearbeitung erfolgt.

8. Verfahren nach einem der Ansprüche 3 bis 7, dadurch gekennzeichnet, daß die spanabhebende Bearbeitung über eine Länge erfolgt, die mehr als bis zur Mitte des Kopfabschnittes, z.B. 2/3 desselben, entspricht.

9. Rohling (R) zur Durchführung des Verfahrens nach einem der Ansprüche 3 bis 8 mit einem ersten Gewindebolzen (2) zum Befestigen am Kieferimplantat (4) und einem Kopfteil (1) mit einer Markierungseinrichtung (3,5), dadurch gekennzeichnet, dass die Markierungseinrichtung (3,5) die Achsrichtung und die Lage des äusseren Umfangs des ersten Bolzens (2) eindeutig festlegt, und dass der Kopfteil (1) einen Abschnitt zur Ausbildung eines zweiten in Richtung des Zahnes bzw. Zahnersatzes auszurichtenden Gewindebolzens (7) aufweist, so dass der erste Gewindebolzen (2) entsprechend der Lage des Kieferimplantats und der zweite Gewindebolzen (7) winkelmässig wie der Zahn bzw. Zahnersatz auszurichten sind.

10. Rohling (R) nach Anspruch 9, dadurch gekennzeichnet, daß die Markierungseinrichtung von einem in Verlängerung der Achse des ersten Bolzens verlaufenden länglichen Vorsprung (3) gebildet wird, der vorzugsweise halbzylindrisch ausgebildet ist und die Stellung des Rohlings in einen Abdruck einprägbar macht.

## Claims

1. Link (B) between a dental implant (4) in a jaw and an artificial tooth, comprising a portion provided with a first screw bolt (2) for fastening on said dental implant (4) which can be attached to a sleeve (10) by means of another screw bolt (7), said link (B) supporting integrally both screw bolts (2, 7), characterised in that the angular orientation of both screw bolts (2, 7) is adapted to the jaw, on the one hand, and to the orientation of the tooth or artificial tooth, on the other hand.

2. Link according to claim 1, characterised in that a ball segment-like portion (1') including a spherical surface (1'') that faces said first screw bolt (2) is provided be-tween the two screw bolts (2, 7), and that the other screw bolt (7) has preferably a length which corresponds to a length extending over more than up to the centre of the whole spherical surface of the ball (1), e.g. to 2/3 of it.

3. A method for producing a link (B) according to anyone of the preceding claims, from a first blank (R) including a screw bolt (2) and a head portion (1) connected to it, characterised in that this blank (R) is first put into an angular position relative to an axis (S) of a machining tool (6) which corresponds to the orientation of the jaw and of the implant (4) fastened therein, and that then the other screw bolt (7) is cut out of the head portion (1) by means of the tool (6) and a thread is machined, the mutual angular orientation of the two screw bolts (2, 7) being adapted to the jaw, on the one hand, and to the orientation of the tooth or artificial tooth, on the other hand.

4. Method according to claim 3, characterised in that a hollow borer or cutter (6) is used as a tool, the hollow interior of it leaving the bolt (7) to be finished when machining said head portion (1).

5. Method according to claim 3 or 4, characterised in that said head portion (1) has a curved surface, and is, in particular, spherical.

6. Method according to claim 3, 4 or 5, characterised in that said blank (R) together with said bolt (2) and the joining head portion (1) is first put into a hardening mass, such as gypsum (G), as a holding basis for an angular position corresponding to the orientation of the jaw and the implant fastened therein relative to an axis (S) of a machining tool (6), and that machining is carried out after hardening.

7. Method according to anyone of claims 3 to 6, characterised in that the blank (R) is first inserted into the implant (4) for determining the orientation of the jaw and of the implant (4) fastened therein, the orientation in fastened condition, particularly the orientation of the axis (A) of its screw bolt (2), being marked by means of a marking arrangement (3, 5), that subsequently a mould is made of the jaw together with the blank (R) and the marking arrangement (3, 5) and that the blank (R), after removal of the mould and the blank (R) from the jaw, is provided with and fixed to a manipulation implant where it is fastened to the mould using the marking arrangement (3, 5), after which machining is carried out, preferably after previous casting the hardening mass, such as gypsum (G), and, in particular, after removal of the mould and the marking arrangement (3).

8. Method according to anyone of claims 3 to 7, characterised in that machining is carried out over a length corresponding to a length longer than up to the centre of the head portion, e.g. to 2/3 thereof.

9. A blank for carrying out the process according to anyone of claims 3 to 8, comprising a first screw bolt (2) for fastening it to the jaw implant (4), and a head portion (1) including a marking arrangement (3, 5), characterised in that said marking arrangement (3, 5) determines the orientation and position of the outer circumference of said first bolt (2) in an unambiguous manner, and that the head portion (1) includes a portion for forming a second screw bolt (7) to be oriented in the direction of the tooth or artificial tooth so that said first screw bolt (2) is to be oriented in correspondence with the position of the jaw implant, and said second screw bolt (7) is to be oriented under the same angle as the tooth or artificial tooth.

10. Blank (R) according to claim 9, characterised in that said marking arrangement is formed by an elongated projection (3) extending as a prolongation of the axis of the first bolt, and being preferably semi-cylindrical, to make an impression of the position of the blank in a mould.

## Revendications

1. Elément de liaison (B) entre un implant (4) fixé sur le maxillaire et une prothèse dentaire, comportant un premier goujon fileté (2) pour la fixation à l'implant (4), qui peut être relié à l'aide d'un autre goujon fileté (7) avec une douille (10), l'élément de liaison (B) portant en une pièce les deux goujons filetés (2, 7), caractérisé en ce que la disposition angulaire des deux goujons filetés (2, 7) est adaptée d'une part à l'implant et d'autre part à l'orientation de la dent ou de la prothèse dentaire.

2. Elément de liaison suivant la revendication 1, caractérisé en ce qu'une section en forme de segment sphérique (1') est prévue entre les deux goujons filetés (2, 7), comportant une surface sphérique (1'') orientée vers le premier goujon fileté (2), et en ce que l'autre goujon fileté (7) présente de préférence une longueur qui est supérieure à la distance jusqu'au milieu de la sphère entière (1) formant la surface sphérique, par exemple les 2/3 de celle-ci.

3. Procédé de fabrication d'un élément de liaison (B) suivant l'une des revendications précédentes à partir d'une première ébauche (R) comportant un goujon fileté (2) et une partie de tête (1) qui y est raccordée, caractérisé en ce que cette ébauche (R) est d'abord amenée dans une position angulaire correspondant à l'orientation du maxillaire ou de l'implant (4) qui y est fixé par rapport à l'axe (S) d'un outil de coupe (6) et en ce qu'ensuite on usine à l'aide de l'outil de coupe (6) l'autre goujon fileté (7) dans la partie de tête (1) et on réalise le filetage, la disposition angulaire des deux goujons filetés (2, 7) étant adaptée d'une part au maxillaire et d'autre part à l'orientation de la dent ou de la prothèse dentaire.

4. Procédé suivant la revendication 3, caractérisé en ce qu'on emploie comme outil une mèche creuse ou une fraise concave (6), dont l'intérieur creux forme le goujon à fabriquer (7) lors de l'usinage par coupe de la partie de tête (1).

5. Procédé suivant la revendication 3 ou 4, caractérisé en ce que la partie de tête (1) présente une surface courbe, en particulier est de forme sphérique.

6. Procédé suivant la revendication 3, 4 ou 5, caractérisé en ce que l'ébauche (R) est d'abord amené, ainsi que le goujon (2) et la partie de tête (1) qui y est fixée, dans une masse à durcissement telle que du plâtre (G) servant de support de maintien, dans une position angulaire correspondant à l'orientation du maxillaire ou de l'implant (4) qui y est fixé par rapport à l'axe (S) d'un outil de coupe (6) et en ce que le travail d'usinage par coupe est effectué après le durcissement.

7. Procédé suivant l'une des revendications 3 à 6, caractérisé en ce que, pour la détermination de l'orientation du maxillaire ou de l'implant (4) qui y est fixé, on place d'abord l'ébauche (R) dans l'implant (4) et on maintient sa position à l'état fixe, en particulier l'orientation de l'axe (A) de son goujon fileté (2), à l'aide d'un dispositif de marquage (3, 5), en ce qu'on prend ensuite une empreinte du maxillaire avec l'ébauche (R) et le dispositif de marquage (3, 5) et en ce que, après enlèvement de l'empreinte et de l'ébauche (R) hors du maxillaire, l'ébauche (R) est pourvue d'un implant de manipulation qui y est fixé et fixée à l'empreinte à l'aide du dispositif de marquage (3, 5), suite à quoi, de préférence après la coulée avec la masse à durcissement telle que plâtre (G), et en particulier après enlèvement de l'empreinte et du dispositif de marquage (3), on effectue le travail d'usinage par coupe.

8. Procédé suivant l'une des revendications 3 à 7, caractérisé en ce que le travail d'usinage par coupe a lieu sur une longueur qui dépasse le milieu de la partie de tête, par exemple correspond aux 2/3 de celle-ci.

9. Ebauche (R) pour mise en oeuvre du procédé suivant l'une des revendications 3 à 8, comportant un premier goujon fileté (2) pour la fixation à l'implant (4) et une partie de tête (1) comportant un dispositif de marquage (3, 5), caractérisée en ce que le dispositif de marquage (3, 5) détermine de manière univoque l'orientation de l'axe et la position de la périphérie extérieure du premier goujon fileté (2) et en ce que la partie de tête (1) présente une partie pour la formation d'un deuxième goujon fileté (7) à orienter en direction de la dent ou de la prothèse dentaire, de sorte que l'orientation angulaire du premier goujon fileté (2) corresponde à la position de l'implant et l'orientation angulaire du deuxième goujon fileté (7) à celle de la dent ou de la prothèse dentaire.

10. Ebauche (R) suivant la revendication 9, caractérisée en ce que le dispositif de marquage est constitué par une saillie (3) longitudinale formée dans le prolongement de l'axe du premier goujon, qui est de préférence de forme semi-cylindrique et permet de prendre une empreinte de la position de l'ébauche.
